# EUROPÄISCHE PATENTSCHRIFT

(11) **EP 0 486 791 B1**
(45) Veröffentlichungstag und Bekanntmachung des Hinweises auf die Patenterteilung: **27.04.1994**
(21) Anmeldenummer: 91116415.0
(22) Anmeldetag: 26.09.1991
(51) Int. Cl.: B23B 27/16, B23B 29/02

(54) **Aufbohrwerkzeug**
Boring tool
Outil à aléser

(30) Priorität: 29.10.1990 DE 4034345
(43) Veröffentlichungstag der Anmeldung: 27.05.1992
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dr.jur. Dipl.-Ing.

(56) Entgegenhaltungen:
- EP-A- 0 319 748
- AU-B- 456 471
- GB-A- 2 092 486
- US-A- 4 414 870
- US-A- 4 437 802

## Beschreibung

Die Erfindung betrifft ein Aufbohrwerkzeug mit mindestens einer Messerplatte gemäß Oberbergiff des Anspruchs 1.

Bohrwerkzeuge der angesprochenen Art sind bekannt (EP-A 0 319 748). Die Messerplatte wird mittels einer Spannpratze festgespannt, die in die Messerbrust Spannkräfte einleitet. Um eine gezielte Aufspaltung der Spannkräfte zu gewährleisten, ist die Messerbrust mit zwei parallel und symmetrisch zur Längsachse der Messerplatte verlaufenden Spannuten versehen.

Bei der Verwendung des Bohrwerkzeugs wird dieses unter Rotation in eine Bohrung eingeführt, wobei die Schneide der im Werkzeugkopf eingespannten Messerplatte Späne von der Bohrungswand abträgt.

Obwohl die Messerplatte in einer Ausnehmung im Werkzeugkopf eingespannt ist, kommt es wegen der hohen Kräfte vor, daß während der Bearbeitung der Wandung eine Lageänderung der Messerplatte eintritt. Dadurch ändert sich das Bohrungsmaß beziehungsweise die eingestellte Schneidgeometrie des Werkzeugs, so daß die bearbeitete Bohrung nicht mehr den gewünschten Anforderungen entspricht. Wenn bei der Verdrehung beziehungsweise Kippbewegung die Messerplatte gänzlich aus der Ausnehmung herausgeschwenkt wird, kann es zu einer vollständigen Zerstörung sowohl des Werkstücks als auch des Werkzeugs kommen, wobei auch umstehende Personen gefährdet werden können.

Es ist daher Aufgabe der Erfindung, ein Aufbohrwerkzeug zu schaffen, bei dem eine lagesichere Einspannung der Messerplatte innerhalb des Werkzeugkopfes gewährleistet ist, wobei insbesondere ein Verdrehen oder Kippen der Schneide gegenüber der Spannpratze auch bei kleinsten Abmessungen der Messerplatte praktisch ganz ausgeschlossen ist.

Diese Aufgabe wird bei einem Aufbohrwerkzeug der eingangs erwähnten Art mit Hilfe der in Anspruch 1 genannten Merkmale gelöst. Dadurch, daß auf der Messerbrust mindestens zwei im wesentlichen parallel zur Längsachse der Messerplatte verlaufende Nuten vorgesehen sind, die sich vorzugsweise symmetrisch zur Längsachse erstrecken und eine formschlüssige Verdrehsicherung zwischen Messerplatte und der zugehörigen Spannpratze bilden, kann eine Verdrehung beziehungsweise Kippbewegung der Messerplatte gegenüber der Spannpratze mit hoher Sicherheit ausgeschlossen werden, so daß Beschädigungen von Werkzeug und Werkstück sowie eine Gefährdung von Personen auf ein Minimum reduziert werden.

Bevorzugt wird eine Ausführungsform des Werkzeugs, bei dem die Nuten und/oder die Vorsprünge von V-förmigen Flanken begrenzt werden, die also unter einem Winkel zueinander verlaufen. Dadurch werden Kräfte von der Spannpratze aufgefangen, die versuchen, die Messerplatte weiter in die Ausnehmung hineinzudrücken oder aus dieser herauszuziehen. Insbesondere werden eine Kippbewegung oder ein Verdrehen der Messerplatte auf diese Weise besonders gut vermieden.

Besonders bevorzugt wird ein Aufbohrwerkzeug, bei dem die Messerplatte in Richtung seiner Längsachse innerhalb der zugehörigen Ausnehmung verschiebbar angeordnet ist und die Nuten beziehungsweise Vorsprünge der Verdrehsicherung in Richtung der Verschiebung -also parallel zur Längsachse der Messerplatte- angeordnet sind. Die Verdrehsicherung wirkt auf diese Weise bei einer Verschiebung der Messerplatte als Führung. Die Verschiebung beziehungsweise Einstellung der Messerplatte kann daher in einem weiten Bereich erfolgen, ohne daß die Gefahr einer Verdrehung beziehungsweise einer Kippbewegung der Messerplatte wesentlich erhöht wird.

Überdies wird eine Ausführungsform des Aufbohrwerkzeugs bevorzugt, bei dem die mit den Nuten beziehungsweise Vorsprüngen versehene Berührungsebenen von Messerbrust und Spannpratze einen spitzen Winkel einschließen, der sich vom Ende der Spannlippe der Spannpratze aus in Richtung auf deren Spannschraube öffnet. Das heißt, die Spannpratze übt mit ihrem vordersten Ende der Spannlippe eine besonders große Einspannkraft auf die Messerplatte aus, wodurch über den frei überstehenden Bereich der Messerplatte eingeleitete Kräfte besonders gut abgefangen werden.

Schließlich wird eine Ausführungsform des Aufbohrwerkzeugs bevorzugt, bei dem die Messerplatte als Wendeplatte ausgebildet ist. Bei einer derartigen Platte können zwei sich gegenüberliegende, vorzugsweise entlang der Längskanten verlaufende Schneiden vorgesehen werden. Nach der Abnutzung der einen Schneide, kann die Messerplatte nach einer Drehbewegung um 180° noch einmal verwendet werden. Um eine in beiden Stellungen identische Einspannung zu erreichen, sind auf der Messerbrust paarweise symmetrisch zur Mittelachse der Messerplatte verlaufende Nuten vorgesehen, die mit Vorsprüngen zusammenwirken, die auf der der Messerbrust zugewandten Auflagefläche der Spannpratze vorgesehen sind, wobei die Nuten und die Vorsprünge eine Verdrehsicherung bilden.

Weitere vorteilhafte Ausgestaltungen und Weiterbildungen des Aufbohrwerkzeugs ergeben sich aus den übrigen Unteransprüchen.

Die Erfindung wird im folgenden anhand der ein Ausführungsbeispiel wiedergebenden Zeichnung näher erläutert. Es zeigen:
- Figur 1: eine perspektivische Teilansicht des vorderen Endes eines Aufbohrwerkzeugs und
- Figur 2: eine von einer Spannpratze gehaltene Messerplatte in Seitenansicht.

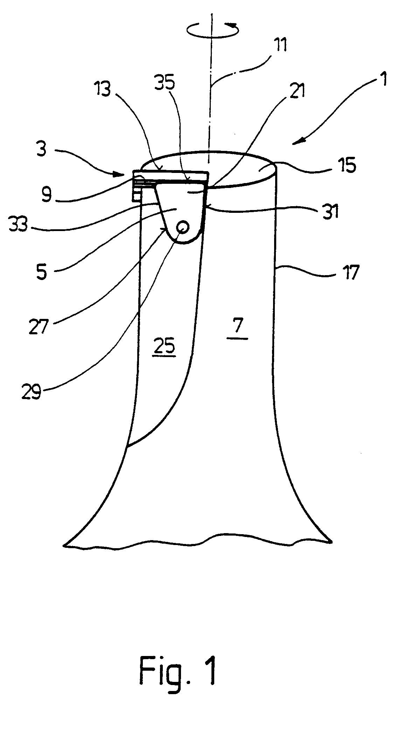

Die Teilansicht in Figur 1 zeigt perspektivisch den Kopf eines Aufbohrwerkzeugs 1 mit einer Messerplatte 3, die von einer Spannpratze 5 festgehalten wird. Die Messerplatte ist hier im wesentlichen rechteckig ausgebildet, wobei deren Längskanten -gemäß Figur 1- horizontal und damit im wesentlichen senkrecht zur Drehachse des Werkzeugs verlaufen.

Die Messerplatte 3 ist in einer in den Werkzeugkopf 7 eingebrachten Nut 9 angeordnet, die -beziehungsweise deren Längsachse- in radialer Richtung zur Mittel- und Drehachse 11 des Werkzeugs verläuft.

Bei der Bearbeitung einer Bohrung wird das Werkzeug in Rotation versetzt, was in Figur 1 durch einen Pfeil angedeutet ist, und in die zu bearbeitende Bohrung eingebracht. Es ist auch möglich, daß bei feststehendem Werkzeug das Werkstück rotiert.

Die perspektivische Ansicht gemäß Figur 1 zeigt, daß die Schneidkante 13 der Messerplatte 3 über die Stirnfläche 15 des Aufbohrwerkzeugs 1 vorspringt. Auch ist erkennbar, daß -in radialer Richtung gesehen- die Messerplatte die Mantelfläche 17 des im wesentlichen zylindrisch ausgebildeten Werkzeugkopfs 7 überragt.

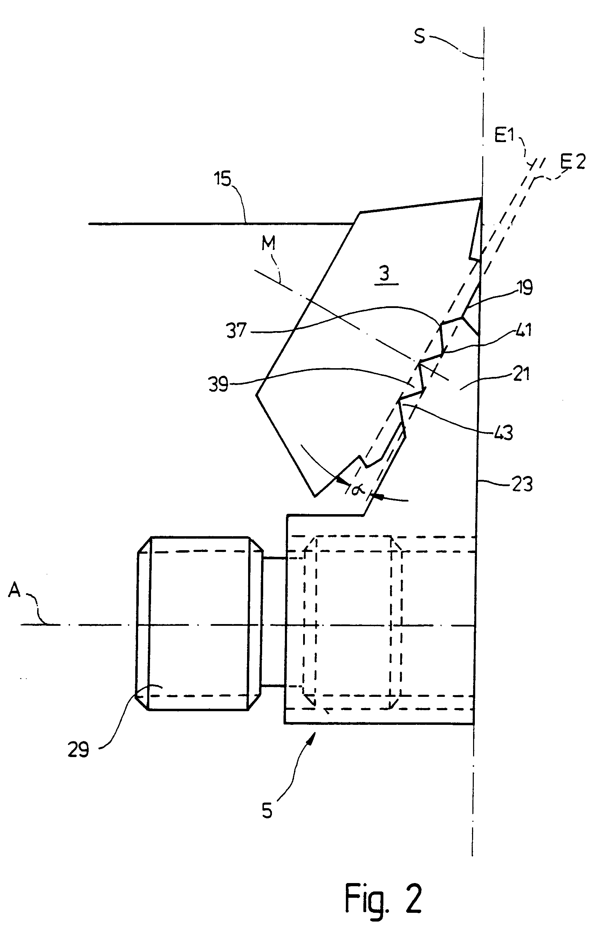

Auf der -in Drehrichtung gesehen- Vorderseite der Messerplatte 3 beziehungsweise auf der Messerbrust 19 (Figur 2) liegt die Spannlippe 21 der Spannpratze 5 auf. Die der Messerbrust 19 abgewandte Oberfläche 23 der Spannpratze 5 schließt vorzugsweise plan mit einer Begrenzungsfläche des Spanraums 25 ab. Dazu ist die Spannpratze 5 in einer in den Werkzeugkopf 7 eingebrachte Ausnehmung 27 versenkt angeordnet, deren Konturen an die äußere Form der Spannpratze 5 so angepaßt ist, daß diese formschlüssig im Werkzeugkopf 7 gehalten wird. Sie wird mittels einer Spannschraube 29, welche die Spannpratze 5 durchdringt und in ein Gewinde im Werkzeugkopf 7 eingreift, gehalten.

In Figur 1 ist die Spannpratze 5 in Draufsicht dargestellt, so daß ersichtlich ist, daß die seitlichen Begrenzungskanten 31 und 33 der Spannlippe 21 einen spitzen Winkel einschließen, der sich -von der Spannschraube aus gesehen- in Richtung auf die Vorderseite 35 der Spannlippe 21 öffnet. Die der Vorderseite 35 gegenüberliegende Rückseite der Spannpratze 5 ist kreisbogenförmig ausgebildet, wobei der Krümmungsradius dieses Bereichs der Spannpratze etwas kleiner gewählt ist als der zugehörige, ebenfalls kreisbogenförmig gekrümmte Bereich der Ausnehmung 27. Figur 1 zeigt überdies, daß die in der Darstellung rechte Begrenzungs- beziehungsweise Seitenkante 31 der Spannpratze praktisch parallel verläuft zur Drehachse 11 des Aufbohrwerkzeugs 1.

Der Spanraum 25 wird durch eine kreissektorförmige Ausnehmung im Werkzeugkopf 7 gebildet.

Figur 2 zeigt -stark vergrößert- eine Messerplatte 3 und eine zugehörige Spannpratze 5 in Seitenansicht. Die übrigen Teile des Aufbohrwerkzeugs sind hier aus Gründen der besseren Übersichtlichkeit abgebrochen beziehungsweise weggelassen. Lediglich die Stirnfläche 15 des Werkzeugkopfs 7, über die die Messerplatte etwas hinausragt, ist durch eine Linie S angedeutet. Messerplatte 3 und Spannpratze 5 sind in der Montagestellung gemäß Figur 1 dargestellt.

Die Messerplatte 3 weist auf ihrer Vorderseite beziehungsweise auf der Messerbrust 19 mindestens zwei, hier beispielhaft drei Nuten 37 mit jeweils dazwischenliegenden Vorsprüngen 39 auf. Die Nuten werden von jeweils zwei zugehörigen Flanken begrenzt, die hier V-förmig unter einem Winkel von ca. 90° zueinander angeordnet sind. Grundsätzlich kann der Neigungswinkel der Flanken in einem weiten Bereich gewählt werden und beispielsweise auch 140° bis 40°, vorzugsweise 120° bis 70° betragen. Die Seitenflächen der Vorsprünge 39 werden durch die Flanken der angrenzenden Nuten gebildet.

Durch die tiefste Stelle der Nuten 37 ist eine gestrichelte Linie E1 gezeichnet, die die gedachte Berührungsebene der Messerplatte 3 bildet.

Die der Messerplatte 3 zugewandte Auflagefläche der Spannlippe 21 der Spannpratze 5 ist entsprechend mit Nuten 41 und dazwischenliegenden Vorsprüngen 43 versehen. Die die Nuten 41 begrenzenden Flanken sind auch hier V-förmig angeordnet und schließen einen Winkel von ca. 90° ein. Für den von den Flanken eingeschlossenen Winkel gilt das für den Flankenwinkel der in die Messerplatte 3 eingebrachten Nuten 37 Gesagte entsprechend. Auch bei der Spannpratze bilden die Flanken zweier benachbarter Nuten 41 die Seitenflächen des zwischen diesen Nuten angeordneten Vorsprungs 43.

Aus dem oben Gesagten wird deutlich, daß die Vorsprünge 39 auf der Messerbrust 19 beziehungsweise die Vorsprünge 43 auf der Auflagefläche der Spannlippe 21 ebenfalls in Seitenansicht im wesentlichen V-förmig ausgebildet sind. Es ist jedoch auch möglich, daß die Vorsprünge im Scheitelbereich abgerundet oder abgeflacht sind, also -im Schnitt gesehen- quasi trapezförmig ausgebildet sind.

Durch den tiefsten Punkt der Nuten 41 verläuft -hier gestrichelt dargestellt- eine gedachte Ebene, die Berührungsebene E2 der Spannlippe 21. Die beiden Ebenen E1 und E2 schließen vorzugsweise einen spitzen Winkel α ein, der sich gemäß Figur 2 von der Vorderseite 35 der Spannlippe 21 aus gesehen in Richtung auf die hier nicht dargestellte Spannschraube 29 (Figur 1) öffnet. Auf diese Weise legt sich die Spannlippe 21 zunächst mit ihrer Vorderseite 35 gegen die Messerbrust 19 an und wird schließlich beim Festspannen gänzlich gegen die Messerbrust 19 gepreßt. Aus Figur 2 ist ersichtlich, daß die Berührungsebene E1 gegenüber der Senkrechten S in Figur 2 und damit gegenüber der in Figur 1 dargestellten Drehachse 11 des Aufbohrwerkzeugs 1 verschwenkt ist. Auf diese Weise kann die der Spannpratze 5 im montierten Zustand in die den Spanraum 25 begrenzende Oberfläche versenkt werden, so daß die Oberfläche 23 der Spannpratze mit der den Spanraum begrenzenden Fläche -fast oder ganzbündig abschließt. Auf diese Weise wird der Spanabfluß nur minimal beeinträchtigt, so daß auch und insbesondere bei kleinen Werkzeugdurchmessern die Spanabfuhr nicht beeinträchtigt wird.

Aus der Darstellung in Figur 2 ist ersichtlich, daß die Nuten 37 und 41 beziehungsweise die Vorsprünge 39 und 43 im wesentlichen symmetrisch ausgebildet sind.

Die Messerplatte 3 ist bei dem hier beschriebenen Werkzeug 1 verschwenkt angeordnet. Das heißt, die zueinander parallel verlaufende Vorder- und Rückseite der Messerplatte, beziehungsweise ihre Mittelebene, verlaufen unter einem Winkel zur Mittelbeziehungsweise Drehachse des Werkzeugs. Dadurch wird die versenkte Anordnung der Spannpratze ermöglicht.

Es handelt sich bei dieser Ausführungsform der Messerplatte 3 um eine sogenannte Wendeplatte, deren gegenüberliegende Längskanten beide als Schneiden ausgebildet sind. Wenn also die in Figur 2 oben liegende Schneidkante stumpf ist, kann die Messerplatte 3 um ihre senkrecht auf der Messerbrust 19 stehende Mittelachse M um 180° gedreht werden, so daß dann die in Figur 2 unten liegende Schneidkante die in dieser Darstellung oben liegende Schneide ersetzt.

Eine derartige Drehbewegung der Wendeplatte ist -unter Beibehaltung der gewünschten Verdrehsicherungseigenschaften- nur dann möglich, wenn die Nuten 37 und die dazwischen liegenden Vorsprünge 39 zu der in der Messerbrust 19 verlaufenden Längsachse symmetrisch angeordnet sind. Entsprechend sind die Vorsprünge auf der der Messerbrust zugewandten Auflagefläche der Spannlippe 21 angeordnet.

Es ist jedoch auch möglich, die Flanken der Nuten beziehungsweise der Vorsprünge nicht symmetrisch zur Senkrechten auf die Berührungsebenen E1 und E2 auszubilden. Die Messerplatte kann dann allerdings nicht als Wendeplatte eingesetzt werden.

Die Neigung der Flanken der Nuten 37 und 41 beziehungsweise der Vorsprünge 39 und 43 kann -wie oben ausgeführt- in einem weiten Bereich frei gewählt werden. Wesentlich ist lediglich, daß die Ausgestaltung der Nuten 37 und Vorsprünge 39 auf der Messerplatte 3 auf die Ausbildung der Nuten 41 und Vorsprünge 43 auf der Auflagefläche der Spannlippe 21 aufeinander abgestimmt ist, so daß sich ein exakter Formschluß zwischen Messerbrust 19 und Spannlippe 21 ergibt. Dabei wirken jeweils beide eine Nut begrenzende Flanken mit den beiden Seitenflächen des Vorsprungs zusammen, der in diese Nut eingreift.

Der Abstand der äußeren Schneidkante von der Mittel- bzw. Drehachse des Werkzeugs wird durch die Anordnung der Nuten und Vorsprünge sowohl auf der Messerplatte als auch auf der Spannpratze festgelegt. Es ist daher möglich, verschiedene Spannpratzen zu fertigen, die sich dadurch voneinander unterscheiden, daß die von der Achse A oder von der Vorderseite 35 aus gemessenen Abstände der Nuten und Vorsprünge auf der Spannpratze verschieden sind. Bei der Verwendung derartig unterschiedlicher Spannpratzen kann der Abstand der äußeren Schneidkante der Messerplatte zur Drehachse des Werkzeugs auf ein gewünschtes Maß eingestellt werden. Wenn in Abweichung von Figur 1 die Messerplatte nicht senkrecht auf der Drehachse des Werkzeugs steht, sondern im wesentlichen parallel dazu angeordnet ist, lassen sich auf diese Weise verschiedene Werkzeugdurchmesser einstellen, indem ihnen verschiedene Abstände der aktiven, außenliegenden Schneidkante der Messerplatte zur Drehachse des Werkzeugs vorgegeben werden. Dabei läßt sich beispielsweise eine Staffelung der verschiedenen Abstände durch Einsatz unterschiedlicher Spannpratzen von 5µm erreichen, das heißt, die Durchmesser der zu bearbeitenden Bohrungen können in 5µm-Schritten variiert werden. Bei einer entsprechenden Abstufung der Abstände der Nuten beziehungsweise Vorsprünge können auch andere Abstufungen vorgenommen werden. Auf diese Weise wird die Einstellung eines Werkzeugs auf vorgegebene Bohrungsdurchmesser wesentlich vereinfacht. Eine Feinjustierung kann damit entfallen, insbesondere dann, wenn die Abstufung der Abstände der Nuten und Vorsprünge auf der Spannpratze fein genug gewählt wird.

Aus der Seitenansicht gemäß Figur 2 ist die Anordnung der Spannschraube 29 innerhalb der Spannpratze 5 ersichtlich. Es ist angedeutet, daß die Spannschraube 29 mit einem Außengewinde mit einem Innengewinde kämmt, welches in einer die Spannpratze 5 durchdringenden Bohrung vorgesehen ist. Die Mittelachse A der Spannschraube steht hier im wesentlichen senkrecht auf der in Figur 2 dargestellten Senkrechten S, die in der den Spanraum 25 begrenzenden Oberfläche verläuft.

Die Messerplatte 3 kann innerhalb der Ausnehmung beziehungsweise Nut 9 verschiebbar angeordnet sein, das heißt, sie kann, in radialer Richtung gesehen, mehr oder weniger weit über die Mantelfläche 17 des Werkzeugkopfs 7 hinausragen. Wenn eine derartige Verstellbarkeit der Messerplatte gewünscht ist, ist es vorteilhaft, wenn die Nuten auf der Messerbrust 19 beziehungsweise auf der Auflagefläche der Spannlippe 21 durchgehend ausgebildet sind, weil dann eine Verschiebung der Messerplatte radial nach außen und innen nicht behindert wird. Überdies ist dafür zu sorgen, daß die Nuten und Vorsprünge in Richtung der Verschiebungseinrichtung verlaufen. Durch den Formschluß zwischen Messerbrust und Spannlippe ergibt sich eine Führung der Messerplatte bei dieser radialen Verschiebung. Es ist möglich, im Werkzeugkopf 7 geeignete Verstelleinrichtungen, beispielsweise Stellschrauben vorzusehen, mit denen die Messerplatte -in radialer Richtung gesehen- nach außen gedrückt wird. Aus Gründen der Übersichtlichkeit sind derartige Stellschrauben hier nicht dargestellt.

Zur Funktion des Aufbohrwerkzeugs ist folgendes zu sagen:

Bei der Bearbeitung von Bohrungsoberflächen, wird das Werkzeug unter Rotation in eine Bohrung eingeführt. Dabei trägt die vordere Schneidkante 13 der Messerplatte 3 Späne von der Bohrungswandung ab. Außer der in Figur 1 horizontalen Schneidkante der Messerplatte kann auch zumindest ein Bereich der in radialer Richtung gesehen äußeren, in Figur 1 etwa senkrecht und damit etwa parallel zur Drehachse des Werkzeugs verlaufenden Kante der Messerplatte 3 Späne von der Bohrungswandung abtragen. Durch den Spanabtrag wirken auf die Messerplatte 3 Kräfte, die diese einerseits gegen die in Figur 1 hintere Begrenzungswand, der die Messerplatte aufnehmenden Nut 9 drängen. Andererseits wirken von oben nach unten parallel zur Drehachse 11 gerichtete Kräfte auf die äußere Kante der Messerplatte 3, so daß eine Kipp- beziehungsweise Drehbewegung der Messerplatte auftreten könnte. Diese wird jedoch durch die Nuten und Vorsprünge auf der Messerbrust 19 beziehungsweise der Auflagefläche der Spannlippe 21 verhindert. Durch die Ausgestaltung von Messerbrust und Spannlippe ergibt sich also eine formschlüssige Verdrehsicherung, die eine lagesichere Einspannung der Messerplatte gewährleistet. Dabei wirken die Flanken der Nuten und Vorsprünge so zusammen, daß im linken Bereich der Spannpratze 5 -gemäß Figur 1- nach unten gerichtete Kräfte aufgefangen werden, die versuchen, die Messerplatte weiter in die zugehörige Nut 9 hineinzudrücken. Dagegen werden auf der gegenüberliegenden radial innen liegenden Seite der Spannpratze 5 in Vorschubrichtung des Werkzeugs wirkende Kräfte, also gemäß Figur 1 nach oben wirkende Kräfte, von den Flanken der Nuten und Vorsprünge aufgefangen. Besonders vorteilhaft ist, daß also durch die Verdrehsicherung Kräfte aufgefangen werden, die einerseits versuchen, die Messerplatte 3 in die Nut 9 hineinzudrücken und die andererseits versuchen, die Messerplatte 3 aus der Nut 9 herauszuheben.

Die lagestabile Verankerung der Messerplatte 3 ist dadurch gewährleistet, daß die Spannpratze 5 in der Ausnehmung 27 im Werkzeugkopf 7 angeordnet ist und somit gegen eine Schwenkbewegung um die Spannschraube 29 gesichert ist. Dadurch, daß die rechte Kante 31 der Spannlippe 21 praktisch parallel zur Drehachse 11 verläuft, wird die Messerplatte in ihrem radial innersten Punkt exakt gehalten. Es ergibt sich ein besonders langer Hebelarm bei der Verankerung der Messerplatte und beim Abfangen der gegen die Vorschubrichtung des Werkzeugs wirkenden Kräfte bei der Bearbeitung einer Bohrung.

Die sichere Verankerung der Messerplatte 3 im Werkzeugkopf 7 wird auch dann aufrechterhalten, wenn die Messerplatte radial nach außen verlagert wird. Dies ergibt sich aufgrund der Führungseigenschaften der Nuten 37 und 41 sowie der Vorsprünge 39 und 43.

Dadurch, daß die Berührungsebenen E1 und E2 einen gegen die Vorschubrichtung des Werkzeugs öffnenden spitzen Winkel α von 1° bis 10°, vorzugsweise von 1° bis 3° einschließen, liegt die Spannlippe 21 beim Einspannen der Messerplatte 3 zunächst in dem Bereich an, der der aktiven Schneidkante 13 am nächsten liegt. Beim Festspannen der Spannpratze 5 verformt sich die Spannlippe 21 etwas, so daß die weiter unten liegenden (siehe Figur 1) Nuten und Vorsprünge auf der Auflagefläche der Spannlippe 21 mit den entsprechenden Nuten und Vorsprüngen auf der Messerbrust 19 in Eingriff treten. Dabei wird eine sehr hohe Spannkraft nahe der Schneidkante 13 in die Messerplatte eingeleitet, die damit gegen die der Spannlippe gegenüberliegende Wandung der Nut 9 gepreßt und damit sicher eingespannt wird.

Durch die optimale Aufnahme der während der Bearbeitung von Bohrungswänden auftretenden Kräfte durch die hier beschriebene Verdrehsicherung kann auf ein Widerlager für die Messerplatte am Grunde der Aussparung beziehungsweise Nut 9 verzichtet werden. Dadurch kann die Messerplatte 3 ohne weiteres als Wendeplatte ausgebildet werden. Die der Schneidkante 13 gegenüberliegende, nicht aktive Schneidkante der Messerplatte kann auch bei der Einspannung derselben nicht beschädigt werden.

Die Zahl der Nuten und Vorsprünge kann bis auf zwei Nuten beziehungsweise Vorsprünge reduziert werden. Das heißt, die hier beschriebene Verdrehsicherung kann auch bei sehr kleinen Messerplatten beziehungsweise bei Werkzeugen mit sehr kleinem Durchmesser eingesetzt werden. Auch dann ergibt sich ein sicherer Halt der Messerplatte, selbst wenn diese relativ weit radial nach außen verschoben wird, so daß die radial äußerste Kante der Messerplatte weit über die Mantelfläche 17 des Werkzeugkopfs 7 hinaussteht.

Aus dem oben Gesagten wird deutlich, daß die Messerplatte gemeinsam mit der Spannpratze auch um 90° verdreht angeordnet sein kann, so daß dann die außen liegende Schneidkante der Messerplatte im wesentlichen parallel zur Drehachse des Werkzeugs verläuft. Dabei ist dann allerdings eine Verstellbarkeit der Messerplatte in radialer Richtung nicht mehr gegeben. Eine Einstellung des Werkzeugs auf einen gewünschten Durchmesser kann -wie oben beschrieben- durch entsprechende Auswahl geeigneter Spannpratzen erfolgen. Ansonsten kann die Messerplatte in diesem Fall lediglich in Richtung der Drehachse verschoben werden, wobei die Verdrehsicherung in dieser Richtung eine Führung bildet.

## Patentansprüche

1. Aufbohrwerkzeug mit mindestens einer als Wendeplatte ausgebildeten, eine Messerbrust (19) aufweisenden Messerplatte (3), die in einer in einen Werkzeugkopf (7) eingebrachten Nut (9) mittels mindestens einer Spannpratze (5) festspannbar ist, wobei auf der Messerbrust (19) mindestens zwei parallel und symmetrisch zur Längsachse der Messerplatte (3) angeordnet Nuten (37) vorgesehen sind, **dadurch gekennzeichnet**, daß die Nuten (37) mit auf der der Messerbrust (19) zugewandten Auflagefläche der Spannpratze (5) entspringende Vorsprünge (43) zusammenwirken und eine formschlüssige Verdrehsicherung bilden.

2. Aufbohrwerkzeug nach Anspruch 1, **dadurch gekennzeichnet**, daß die Nuten (37) und/oder die Vorsprünge (43) von V-förmigen Flanken begrenzt werden.

3. Aufbohrwerkzeug nach Anspruch 2, **dadurch gekennzeichnet**, daß die Flanken einen Winkel von 140° bis 40° einschließen.

4. Aufbohrwerkzeug nach Anspruch 2, **dadurch gekennzeichnet** daß die Flanken einen Winkel von 120° bis 70° einschließen.

5. Aufbohrwerkzeug nach Anspruch 2, **dadurch gekennzeichnet**, daß die Flanken einen Winkel von 90° einschließen.

6. Aufbohrwerkzeug nach einem der Ansprüche 1 bis 5, **dadurch gekennzeichnet**, daß sich die Nuten (37) durchgehend über die gesamte Messerbrust (19) der Messerplatte (3), und sich die Vorsprünge (43) durchgehend über die ganze Breite der Auflagefläche der Spannpratze (5) erstrecken.

7. Aufbohrwerkzeug nach einem der Ansprüche 1 bis 5, **dadurch gekennzeichnet**, daß sich die Nuten (37) durchgehend über die gesamte Messerbrust (19) der Messerplatte (3) erstrecken.

8. Aufbohrwerkzeug nach einem der Ansprüche 1 bis 5, **dadurch gekennzeichnet**, daß sich die Vorsprünge (43) durchgehend über die ganze Breite der Auflagefläche der Spannpratze (5) erstreckt.

9. Aufbohrwerkzeug nach einem der vorhergehenden Ansprüche, **dadurch gekennzeichnet**, daß die Verdrehsicherung so ausgebildet ist, daß die Messerplatte (3) innerhalb einer Ausnehmung (9) verschiebbar ist.

10. Aufbohrwerkzeug nach einem der vorhergehenden Ansprüche, **dadurch gekennzeichnet**, daß die Nuten (37) und die Vorsprünge (43) der Verdrehsicherung parallel zur Verschiebungsrichtung der Messerplatte (3) angeordnet sind.

11. Aufbohrwerkzeug nach einem der vorhergehenden Ansprüche 1 bis 8, **dadurch gekennzeichnet**, daß eine mit Nuten (37) versehene Berührungsebene (E1) der Messerplatte (3) und eine mit Vorsprüngen (43) versehene Berührungsebene (E2) der Spannpratze (5) einen spitzen Winkel (α) einschließen, der sich vom Ende der Spannlippe (21) der Spannpratze (5) in Richtung auf deren Spannschraube (29) öffnet.

12. Aufbohrwerkzeug nach Anspruch 11, **dadurch gekennzeichnet**, daß der Winkel (α) im Bereich von 1° bis 10° liegt.

13. Aufbohrwerkzeug nach Anspruch 11, **dadurch gekennzeichnet**, daß der Winkel (α) im Bereich von etwa 1° bis 3° liegt.

## Claims

1. A boring tool with at least one cutter plate (3) in the form of a turning plate, comprising a front (19) and clampable by means of at least one clamping claw (5) in a groove (9) formed in a tool head (7), wherein at least two grooves (37) arranged parallel and symmetrically to the longitudinal axis of the cutter plate (3) are provided on the front (19) of the cutter, **characterized in that** the grooves (37) cooperate with projections (43) starting on the abutment face of the clamping claw (5) facing the front (19) of the cutter and form a safeguard to prevent rotation in a positively locking manner.

2. A boring tool according to Claim 1, **characterized in that** the grooves (37) and/or the projections (43) are bounded by V-shaped flanks.

3. A boring tool according to Claim 2, **characterized in that** the flanks form an angle of from 140° to 40°.

4. A boring tool according to Claim 2, **characterized in that** the flanks form an angle of from 120° to 70°.

5. A boring tool according to Claim 2, **characterized in that** the flanks form an angle of 90°.

6. A boring tool according to one of Claims 1 to 5, **characterized in that** the grooves (37) extend continuously over the entire front (19) of the cutter plate (3), and the projections (43) extend continuously over the entire width of the abutment face of the clamping claw (5).

7. A boring tool according to one of Claims 1 to 5, **characterized in that** the grooves (37) extend continuously over the entire front (19) of the cutter plate (3).

8. A boring tool according to one of Claims 1 to 5, **characterized in that** the projections (43) extend continuously over the entire width of the abutment face of the clamping claw (5).

9. A boring tool according to one of the preceding Claims, **characterized in** **that** the safeguard to prevent rotation is constructed in such a way that the cutter plate (3) is displaceable inside a recess (9).

10. A boring tool according to one of the preceding Claims, **charaterized in** **that** the grooves (37) and the projections (43) of the safeguard to prevent rotation are arranged parallel to the displacement direction of the cutter plate (3).

11. A boring tool according to one of the preceding Claims 1 to 8, **characterized in that** a contact plane (E1) of the cutter plate (3) provided with grooves (37) and a contact plane (E2) of the clamping claw (5) provided with projections (43) form an acute angle (α) opening from the end of the lip (21) of the clamping claw (5) in the direction of the tensioning screw (29) thereof.

12. A boring tool according to Claim 11, **characterized in that** the angle (α) is in the range of from 1° to 10°.

13. A boring tool according to Claim 11, **characterized in that** the angle (α) is in the range of from about 1° to 3°.

## Revendications

1. Outil à aléser avec au moins une plaque de coupe (3) réalisée en plaque réversible, comprenant une face de lame (19), qui peut être bloquée dans une rainure (9) mise en place dans une tête d'outil (7) au moyen d'au moins une griffe de serrage (5), outil dans lequel sur la face de la lame (19) sont prévus au moins deux rainures (37) disposées parallèlement et symétriquement par rapport à l'axe longitudinal de la plaque de coupe (3), caractérisé en ce que les rainures (37) agissent ensemble avec des saillies (43) provenant de la surface d'appui de la griffe de serrage (5) tournée vers la face de la lame (19) et forment une sécurité anti-torsion en liaison par la forme.

2. Outil à aléser selon la revendication 1, caractérisé en ce que les rainures (37) et/ou les saillies (43) sont délimitées par des arêtes en forme de V.

3. Outil à aléser selon la revendication 2, caractérisé en ce que les arétes forment un angle compris entre 140° et 40°;

4. Outil à aléser selon la revendication 2, caractérisé en ce que les arêtes forment un angle compris entre 120° et 70°.

5. Outil à aléser selon la revendication 2, caractérisé en ce que les arêtes forment un angle de 90°.

6. Outil à aléser selon l'une des revendications 1 à 5, caractérisé en ce que les rainures (37) s'étendent de façon continue sur toute la face de la lame (19) de la plaque de coupe (3), et en ce que les saillies (43) s'étendent de manière continue sur toute la largeur de la surface d'appui de la griffe de serrage (5).

7. Outil à aléser selon l'une des revendications 1 à 5, caractérisé en ce que les rainures (37) s'étendent sur toute la face de la lame (19) de la plaque de coupe (3).

8. Outil à aléser selon l'une des revendications 1 à 5, caractérisé en ce que les saillies (43) s'étendent sur toute la largeur de la surface d'appui de la griffe de serrage (5).

9. Outil à aléser selon l'une des revendications précédentes, caractérisé en ce que la sécurité de torsion est réalisée de façon que la plaque de coupe (3) soit déplaçable à l'intérieur d'un évidement (9).

10. Outil à aléser selon l'une des revendications précédentes, caractérisé en ce que les rainures (37) et les saillies (43) de la sécurité de torsion sont disposées parallèlement au sens de déplacement de la plaque de coupe (3).

11. Outil à aléser selon l'une des revendications précédentes 1 à 8, caractérisé en ce qu'un plan de contact (E1) muni de rainures (37) de la plaque de coupe (3) et un plan de contact (E2) muni de saillies (43) de la griffe de serrage (5), forment un angle (α) aigu, qui s'ouvre à partir de l'extrémité de la lèvre de serrage (21) de la griffe de serrage (5) en direction de sa vis de serrage (29).

12. Outil à aléser selon la revendication 11, caractérisé en ce que l'angle (α) se situe dans la gamme de 1° à 10°.

13. Outil à aléser selon la revendication 11, caractérisé en ce que l'angle (α) se situe dans la gamme d'environ 1° à 3°.
